# EUROPEAN PATENT APPLICATION

(11) **EP 4 648 238 A1**
(43) Date of publication of application: **12.11.2025**
(21) Application number: 25175457.8
(22) Date of filing: 09.05.2025
(51) Int. Cl.: H02G 3/06

(54) **ANGLED CONNECTOR FOR CABLE DUCTS OR TRAYS**

(30) Priority: 10.05.2024 IT 202400010609
(71) Applicant: FEMI-CZ S.p.A., 45100 Rovigo (RO) (IT)
(72) Inventor: ZAMBELLI, Antonio, 45100 Rovigo (RO) (IT)
(74) Representative: Marietti, Andrea

(57) **Abstract**

Angled connector (1) for cable ducts or trays (2, 3), of the type comprising a box-like body (14) with a plurality of sides and having a first connecting opening (12), which defines a first coupling direction (U) for a first cable duct or tray (2), and at least one open area (15; 15'; 15"), which substantially corresponds to one side of that box-like body (14) and which is distinct from said first connecting opening (12) and can be coupled to a respective removable covering wall (16; 16'; 16"). The aforesaid removable covering wall (16; 16'; 16"), which is substantially sheet-like, is shaped so as not to entirely obstruct that at least one open area (15; 15'; 15") and can be assembled in a directable manner according to a plurality of distinct angular positions with respect to the same open area (15; 15'; 15") in order to define at least one second connecting opening (13) which defines a second coupling direction (E; E1, E2, E3) for a second cable duct or tray (3).

## Description

### FIELD OF THE INVENTION

The present invention relates to a corner connector, also referred to herein as an "angled connector", for connecting together two cable ducts or trays having extent directions, and sometimes also angles of the supporting planes, that do not coincide. It should be mentioned herein that the cable ducts or trays are supporting bodies, e.g., made of metal or polymer material, which usually have concave or tubular shape, in which a supporting plane for cables of electrical, telephone or data type and a prevailing extent direction can be seen. Here and in the following, reference will be made mainly to the longitudinal extent direction of these ducts or trays, overlooking the relative angular direction of the respective supporting planes, which, of course - according to known art - can also be varied thanks to this type of corner connector. Specifically, the present invention relates to an angled connector, sometimes referred to as a "skewed elbow", comprising a box-like body having a first and a second connecting opening for a first and a second cable ducts or trays, respectively, in which the connecting directions - and sometimes also the angle of the respective supporting planes - respectively imposed on the cable ducts or trays by these connecting openings, are not coincident and are usually at right angles to each other.

### KNOWN PRIOR ART

In the field of electrical, telephone and/or data network system installation inside a civil or industrial building or inside any other structure, e.g., a ship or aircraft, it is known in the art the use of cable ducts or trays, which, depending on the geometry of the environment in which they are to be mounted, may require the use of special corner connectors, also referred to herein as "angled connectors," which allow the direction according to which the cables, and thus the respective cable ducts or trays, are to be arranged to be changed.

According to known art, these corner connectors, or "angled connectors", sometimes referred to as "skew elbows", are made so that each of them is adapted to allow the desired angular variation in the direction followed by the cables and thus the respective cable ducts or trays, with the respective supporting planes.

Specifically, once the outlet connecting opening of a cable duct or tray has been formed in a box-like body, it is known in the art to make the inlet connecting opening of a corresponding cable duct or tray on the same box-like body of the angled connector, so that the coupling direction with a cable duct or tray defined by the outlet connecting opening and the coupling direction with a cable duct or tray defined by the inlet connecting opening are arranged with respect to each other to form the desired angle.

This solution requires the manufacture of numerous types of these angled connectors, each of which takes into account the required angle between the desired coupling directions for the inlet and outlet cable ducts or trays.

Therefore, the manufacturer of these angled connectors, and sometimes also the installer of electrical, telephone and/or data network systems, needs to stock a large number of items corresponding to the various types of angled connectors needed, given the poor versatility of such connectors.

Of course, the overall dimensions of these angled connectors are also significant when it comes to storing them in the warehouse.

In order to reduce the number of types of connectors for cable ducts or trays and thus increase their respective versatility, the national patent IT 102021000018098 in the name of BTICINO teaches how to make the box-like body of a connector in which at least some walls of the same box-like body are removable and replaceable with connecting elements equipped with seats for the connection with a cable duct or tray. I should be noted that these connecting elements described in IT 102021000018098 also have box-like configuration with a truncated-pyramid portion that ends at its peak with a parallelepiped-shaped seat which is provided with a connecting opening for a cable duct or tray.

Depending on the shape of the available connecting elements and how they are applied to replace one or more of the walls of the box-like body, each connectors can be assembled each time by removing the wall, or walls, to be replaced with a connecting element and thus a connector can be obtained which is adapted to the intended angular variation to be imposed on the cables carried by the respective cable ducts or trays.

Although this solution reduces the number of connector types required, it still requires a certain number of connecting elements different from each other to be manufactured, and requires the operator responsible for installing the electrical, telephone, and/or data network system to carry out laborious tasks of disassembling the walls to be replaced and assembling the corresponding connecting elements. Additionally, these connecting elements have a particularly complex outline and thus have significant overall dimensions, especially when these elements must be arranged in a warehouse.

Japanese Patent JP 2005-341637 A describes an angled connector for cable ducts in which a box-like body has a first connecting opening for a cable duct and an open, square-shaped area arranged in a plane orthogonal to that of the first connecting opening. A removable cover, also square and equipped with a shaped window that opens within one of its peripheral segment, can be arranged to cover the open area in three distinct angular positions, so that the window, to which corresponds a second connecting opening for an additional cable duct, can be arranged at three distinct spatial positions.

The removable cover of JP 2005-341637 A has a complex outline (Fig. 7) and thus requires difficult and expensive manufacture. Additionally, the aforesaid shaped window on this removable cover lends to certain rigidity in the application of this angled connector, since the size and position of the angled window must be precisely matched to the size and position of the cable duct for which this shaped window is intended.

Object of the present invention is to provide corner connectors, or angled connectors, for cable ducts or trays that do not have, or otherwise reduce, the drawbacks of the solutions of known prior art and that are particularly versatile.

In particular, it is an object of the present invention to manufacture these angled connectors so that there is no need to store a large quantity of different types of connectors in a warehouse and that, at the same time, the overall space they take up when stored can be reduced.

A further object of the present invention is to make angled connectors for cable ducts or trays that are particularly easy to assemble and install in a respective electrical, telephone and/or data network system.

It is another object of the present invention to make these angled connectors in an easy and inexpensive way, thus making them environmentally sustainable.

### SUMMARY OF THE INVENTION

These and other objects are achieved by the angled connector for cable ducts or trays according to the first independent claim and the following dependent claims.

The angled connector for cable ducts or trays, according to the present invention, comprises a box-like body having a first connecting opening which defines a first coupling direction for a first cable duct or tray, and at least one open area which substantially corresponds to one side of said box-like body and which is distinct from the aforesaid first connecting opening and can be coupled to a respective removable covering wall, which is substantially sheet-like. Advantageously, this removable covering wall, which is substantially sheet-like, is shaped so as not to entirely obstruct the aforesaid open area and can be assembled in a directable manner according to a plurality of distinct angular positions with respect to this open area, so as define at least one second connecting opening with a second coupling direction for a second cable duct or tray.

It should be noted from the outset that the term "wall," when referring to the component that removably covers the aforesaid open area, is understood herein as a substantially sheet-like body, that is, substantially two-dimensional, showing at most a perimeter bend on only part of its sides. In particular, this substantially sheet-like "wall" can be obtained from a metal foil by shearing it and then possibly bending part of its edges.

Preferably, this second connecting opening is made between part of the perimeter edge of the open area and part of the removable covering wall.

Furthermore, preferably, the second connecting opening can be defined between a perimeter side of the open area and a perimeter side of the removable covering wall, so that this second opening is defined between these perimeter sides and may have length substantially equal to the length of these perimeter sides.

Herein, it should be noted that the expression "connecting opening" means herein a slot suitably sized and shaped, which opens in the box-like body of the angled connector to allow the cables to pass therethrough, and which is shaped for the connection to the end of a respective cable duct or tray according to a coupling direction that is substantially coincident with the direction taken by the longitudinal extent axis of the same cable duct or tray to be connected to that angled connector. Please note that this connecting opening can further be shaped to allow it to be coupled to a respective cable duct or tray such that the supporting plane of the cable duct or tray can be arranged according to the most suitable angular position.

The solution outlined herein allows an extremely versatile angled connector for cable ducts or trays to be easily made, in which the direction of one connecting opening relative to another, and thus of one coupling direction relative to the other, can be simply changed by angularly directing, as desired, the aforesaid removable covering wall with respect to the open area provided in the box-like body of the angled connector itself.

This way, the number of angled connector types required to install an electrical and/or telephone and/or data network system can be reduced, since this angled connector according to the present invention can be easily adapted to different situations in which the cables supported by the respective cable ducts or trays need to be arranged at an angle.

The use of a single box-like body to easily define - that is, by angularly directing a respective removable covering wall over an open area of the box-like body - different combinations in the direction of one connecting opening relative to the other connecting opening of the angled connector, makes this angled connector and its components easily to be stored.

It should be noted that, being the second connecting opening, and, therefore, with it the respective second coupling direction, directed on the open area according to the direction in which the respective removable cover wall is assembled, the coupling directions defined by these connecting openings, and therefore the arrangement of the open area with respect to the first connecting opening, are preferably perpendicular to each other, or at least not coincident.

According to a preferred aspect of the invention, the removable covering wall can be directed relative to the respective open area according to at least three different relative angular positions.

This solution, which increases the versatility of the angled connector of the present invention, can be achieved, for example and preferably, thanks to aforesaid open area being formed with a regular polygonal, or circular, shape, and to the respective removable covering wall being formed, as well, with a polygonal, or circular, shape congruent with the shape of aforesaid open area and being provided with at least one recess next to at least one side of this regular polygonal shape, or at a specific arc of circumference, so as to define the aforesaid second connecting section.

In the case where the open area of the box-like body follows a regular polygonal shape and the respective removable covering wall also has a polygonal shape whose dimensions are congruent with those of the open area, in an embodiment of the invention, the aforesaid at least one recess made in this regular covering wall can be made according to a line that geometrically "cuts" linearly the removable covering wall at one side of the polygonal shape of the open area, and preferably cuts it according to a line that is a straight line parallel to that side.

When the open area has regular polygonal shape, according to an aspect of the present invention the aforesaid recess is made in the removable covering wall by means of a geometric line parallel to a perimeter side of the aforesaid polygonal shape.

Actually, the removable covering wall, which is basically sheet-like, is shaped like the polygonal outline of the respective open area from which a portion has been removed by a line parallel to one perimeter side (segment) thereof.

This embodiment is both particularly simple and inexpensive to produce and is also particularly easy to assemble.

Specifically, the regular polygonal shape of the open area may be square, and therefore the congruent shape of the respective removable closing wall can be rectangular, with two opposite sides of substantially equal length to the segment of the square of the open area.

In an alternative embodiment, the aforesaid open area may have a star-like shape with a plurality of arms branching off from a central point, and thus the respective removable covering wall also has a star-like shape that is congruent with the star-like shape of the respective open area, even though without at least part of an arm of this plurality of arms.

According to a particularly inexpensive embodiment, the angled connector for cable ducts or trays according to an aspect of the present invention provides that the aforesaid removable substantially sheet-like covering wall is made of substantially planar sheet metal. In this case, the box-like body of the angled connector is also preferably made of sheet metal.

Again, in order to increase the versatility of the angled connector according to the present invention, it is provided that removable foils can be made which can be constrained to part of the perimeter edge of at least one connecting opening, and preferably can be constrained to both the connecting openings, to reduce their section that is to be coupled to the respective cable duct or tray.

It should be specified that these removable foils, which can be constrained to part of the perimeter edge of at least one connecting opening of an angled connector ("skew elbow") in order to adapt the connecting section of this at least one connecting opening to the outline of the cable duct or tray to be coupled, are innovative per se, regardless of their use in an angled connector of the type described above, as they can also be used in traditional angled connectors.

Therefore, even independently of the angled connector described above and thus in general even with angled connectors that are already known in the art, the use of at least one of the aforesaid removable foils, which can be constrained to part of a perimeter edge of at least one connecting opening of an angled connector, enables this connecting opening to be adapted to cable ducts or trays of different widths or heights, without the need to shape this connecting opening in advance to be congruent with the width and height of the cable duct or tray it is intended for.

In an embodiment of the invention, at least one removable foil can be constrained to part of the perimeter edge of the aforesaid open area and/or part of the perimeter edge of the respective removable closing wall, at the respective connecting opening, so as to partially block the aforesaid connecting opening.

This way, the connecting opening can be adapted to the different shapes and size of the cable duct or tray which is intended to be coupled to this connecting opening, without the need for the corresponding removable covering wall to be made in specific shapes.

Other advantageous particular embodiments of the present invention are set forth in the following claims.

Generally speaking, as the person skilled in the art can understand, the connector claimed herein is a "universal" connector constituting a single attachment adapted to connect cable ducts or trays of any height, with any direction and on non-coincident supporting planes.

This connector of the present invention reduces the number of items corresponding to the various connector types currently in use, thus allowing product industrialization, significant production optimization, as well as a substantial decrease in storage volumes; it greatly simplifies the sales process by preventing possible misunderstandings in communication exchanges between installers/buyers/technical offices and the manufacturer's sales department, since the item is effectively universal; finally, it shortens supply time.

This connector, inserted within a cable support system, facilitates the laying of cables, e.g., electrical cables, which can be carried out entirely through open cable routing and is made in such a way as to avoid the harmful and time-consuming work of threading the cables themselves.

### BRIEF DESCRIPTION OF THE FIGURES

The present invention will be better understood form the detailed description of some of its embodiments, proposed hereafter by way of example only and not limitation, with reference to the attached figures, in which:
- Figure 1A is a perspective view of part of an electrical, telephone, or data network system constrained to the wall of a structure, in which the respective cable trays are arranged at right angles to each other thanks to an angled connector according to an aspect of the present invention;
- Figure 1B is a side view of the angled connector and the respective cable trays shown in Figure 1A;
- Figure 1C is a perspective view of the angled connector and the respective cable trays shown in Figures 1A and 1B arranged in a different spatial orientation;

- Figure 2 is a perspective view of the angled connector according to the present invention that can be seen in Figures 1A, 1B and 1C, arranged in a first configuration;
- Figure 3 is a perspective view of only the box-like body of the angled connector in Figure 2;
- Figures 4 and 5 shows a perspective view of two possible additional configurations of the angled connector shown in Figure 2;
- Figure 6 shows a perspective view of an angled connector according to an aspect of the present invention, in a configuration in which it is equipped with foils partially blocking the coupling openings for the cable trays;
- Figures 7 and 8 show perspective views of a partially exploded and assembled angled connector, respectively, comprising, according to an aspect of the invention, foils, different from those shown in Figure 6, which partially block the coupling openings for the cable trays;
- Figures 9 and 10 show a perspective view of part of an electrical, telephone or network system equipped with an angled connector of the type shown in Figure 2, in which the angled connector is arranged according to the configuration of Figure 2 and according to the configuration of Figure 5, respectively;
- Figures 11, 12, 13 schematically illustrate possible configurations of an open area and the respective removable covering wall of angled connectors for cable ducts or trays according to preferred aspects of the present invention;
- Figure 14 is another perspective view of an angled connector, according to an aspect of the invention, coupled to two cable trays, in which some possible fastening means between the components of the box-like body and these cable trays are highlighted.

### DETAILED DESCRIPTION OF SOME EMBODIMENTS OF THE INVENTION

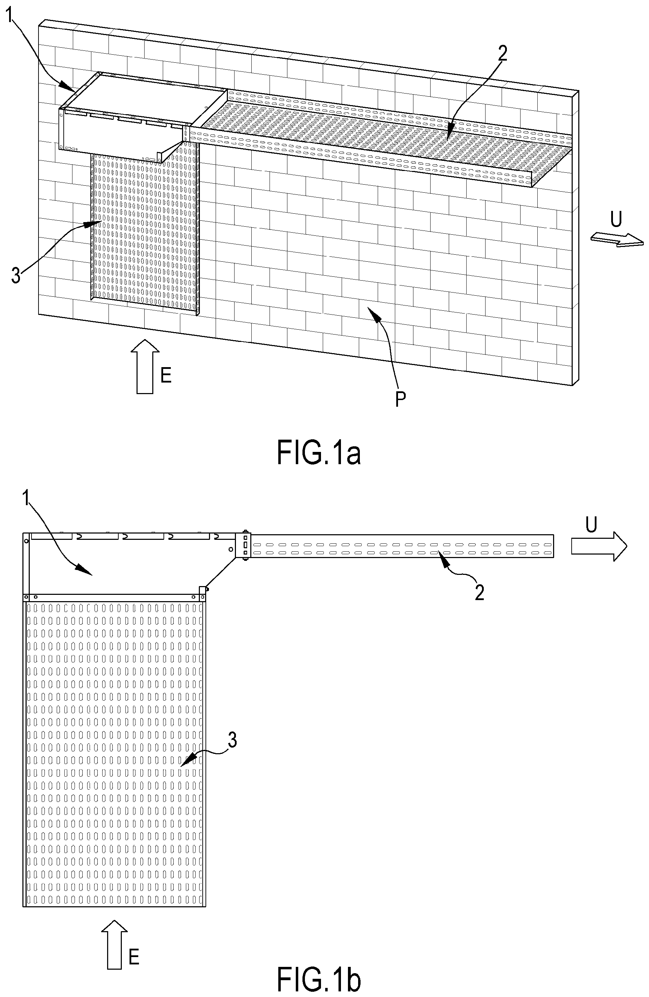

Referring first to Figure 1A, a section of an electrical, telephone and/or network system, of the type that can be installed, for example, in civil or industrial buildings, or in movable structures such as ships or aircraft is shown, which includes an angled connector 1 and cable trays or ducts 1, 2 and which is shown, by way of example only, constrained to a stone-made wall P of a building.

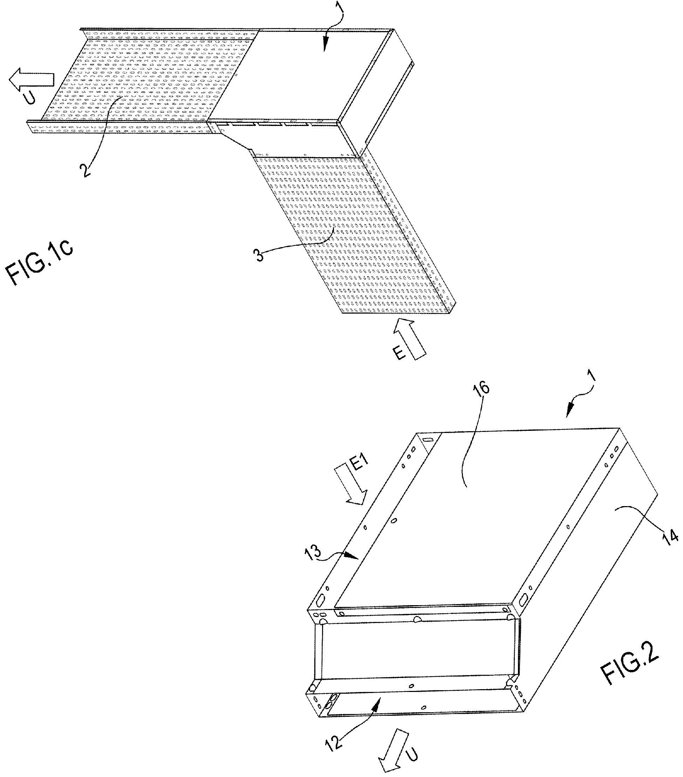

This electrical cable system, as also shown in Figures 1B and 1C, comprises an angled connector 1 which, according to an aspect of the present invention, is shaped to allow the cables (not shown) of this system to be arranged according to angled configurations and in particular to allow respective cable trays or ducts 2, 3 to be arranged along different directions E, U, not coincident with each other.

More specifically, the angled connector 1, sometimes also referred to as "skew elbow", comprises a first and a second connecting opening that define a first coupling direction U for a first cable tray or duct 2 and a second coupling direction E for a second cable tray or duct 3, respectively, such that the first coupling direction U and the second coupling direction E are not coincident with each other and usually, though not exclusively, are substantially orthogonal to each other, as shown in Figures 1A, 1B and 1C.

As known in the art, these first and second connecting openings are connected to each other inside the angled connector 1, so as to allow the cables of the respective electrical, telephone and/or data network system to be arranged according to a certain angle, in their extent determined by the installation needs, i.e., to take a first inlet direction E and a second outlet direction U, or vice versa.

It should be noted that the direction of the arrows E, U in Figures 1A, 1B and 1C, as well as the arrows E1, E2, E3 and U in the following figures, are for illustrative purposes only and in no way denotes a direction in which the cables retained by the respective cable trays or ducts 2, 3 are inserted, or a direction in which electrical or optical signals pass through these cables.

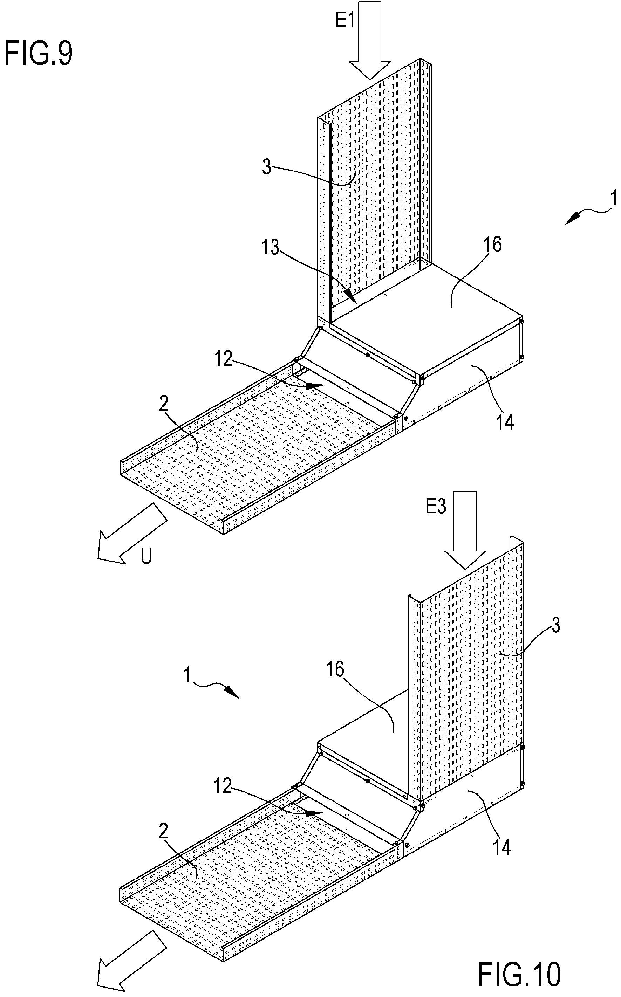

It should be noted that the cable trays or ducts 2, 3 shown in Figure 1 and then also in Figures 9 and 10, are depicted without the cables fixed thereto and are also depicted mechanically constrained to the angled connector 1 at the aforesaid first and second connecting openings.

It should also be noted that, although the cable supporting planes of the cable trays 2, 3 illustrated in Figures 1A, 1B and 1C are at the bottom of concavities all facing one direction, it is obviously not excluded that these cable supporting planes can be at the bottom of concavities facing directions different from each other, or in any way directions different from those illustrated here.

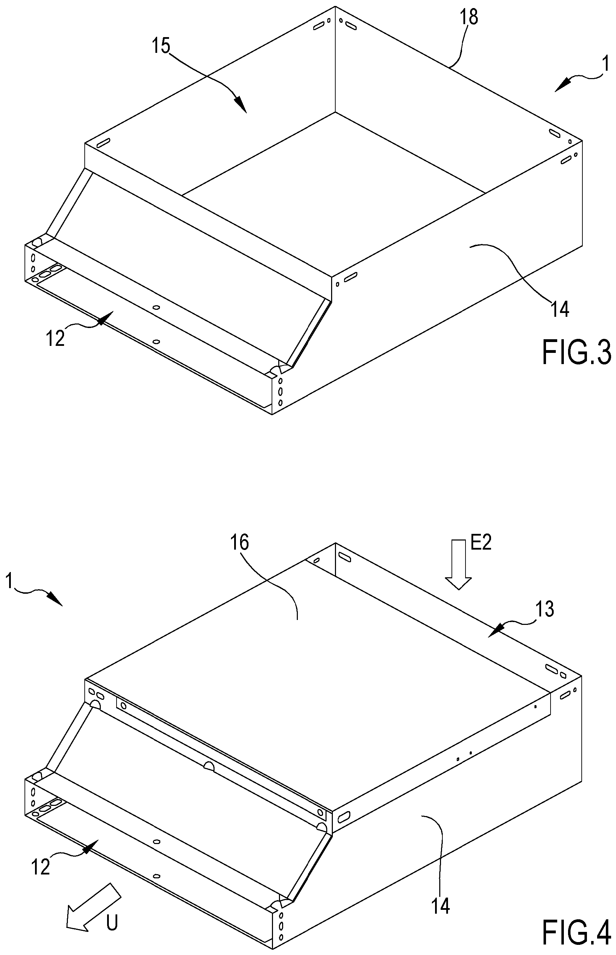

As also illustrated in Figures 2 and 3, the angled connector 1, according to an aspect of the present invention, comprises a box-like body 14 and a respective removable covering wall 16 that can be combined with this box-like body 14.

It should be immediately noted that the removable covering wall 16 is a substantially sheet-like wall, i.e., substantially two-dimensional, which preferably has, along its perimeter edge, a bend that affects only part of that perimeter edge, and in particular affects only some segments of the perimeter edge itself.

Preferably, this removable, substantially sheet-like, covering wall 16 is made from a foil, e.g., a metal foil, cut/sheared and possibly bent.

The box-like body 14, in the embodiment shown in the figures, is geometrically shaped so as to have a plurality of sides that, in the particular shape shown herein, define a side surface and two opposing parallel bases.

However, alternative embodiments of the angled connector 1 by means of a box-like body 14 with a plurality of sides arranged differently from what is shown herein in the figures are not excluded.

The box-like body 14 comprises a first connecting opening 12 that defines a first coupling direction U for a cable tray, i.e., that is shaped so as to allow a cable tray or duct 2 that extends substantially along that first coupling direction U to be fastened. In particular, the first connecting opening 12 may comprise means for fastening the end of a cable tray or duct 2 which consist, for example, of through holes and/or slots and respective screws or bolts, or other threaded fastening means. In this case, the end of the cable tray or duct 2 is also provided with through holes and/or slots that are complementary to and coincident with those formed at the first connecting opening 12.

Alternatively, in embodiments not described herein, other types of means for fastening the end of a cable tray or duct 2 to the first connecting opening 12 can be provided, such as sliding engagement elements, interlocks, etc.

The box-like body 14 also comprises, at a side thereof - for example (as in the figures) at a base thereof when the first connecting opening 12 is formed in one side of its side surface - an open area 15 which is delimited by a respective ending perimeter edge 18, and which, as shown in Figure 3, is intended to be partially covered by the aforesaid removable covering wall 16, as can be seen, for example, in Figure 2.

Specifically, the perimeter edge 18 comprises constraining means for the removable covering wall 16, such as through holes and/or slots to engage screws, bolts or other threaded fastening means. In this case, the removable covering wall 16 comprises through holes and/or slots that coincide with and are complementary to those of the perimeter edge 18 of the open area 15 of the box-like body 14.

Specifically, the removable covering wall 16, which is substantially sheet-like, comprises through holes and/or slots formed at the aforementioned bend affecting part of its perimeter edge.

The alternative use of other constraining means, such as engagement elements, interlocks, etc., to constrain the removable covering wall 16 to the perimeter edge 18 of the open area 15 of the box-like body 14 is not excluded.

The removable covering wall 16 is shaped so as to overlap only partially the open area 15, that is, it is shaped so as to not entirely obstruct this open area 15, so as to define, preferably between one side thereof or part of one side thereof, and part of the perimeter edge 18 of the box-like body 14, a second connecting opening 13 for a cable tray or duct 3.

Preferably, this second connecting opening 13 is defined by a linearly extending and preferably straight side of the removable covering wall 16 in cooperation with a segment of the perimeter edge 18 of the box-like body 14.

Furthermore, according to a preferred embodiment, the second connecting opening 13 can be defined between a perimeter side of the open area 15 and a perimeter side of the removable, substantially sheet-like, covering wall 16, so that the aforesaid second opening 13 is defined between these perimeter sides and has length substantially equal to their length.

In particular, the second connecting opening 13 is suitably shaped to define a second coupling direction E1 for a cable tray or duct 3 and is then provided with means to fasten thereto the end of a cable tray or duct 3, these means being similar or identical to those described above for the first connecting opening 12.

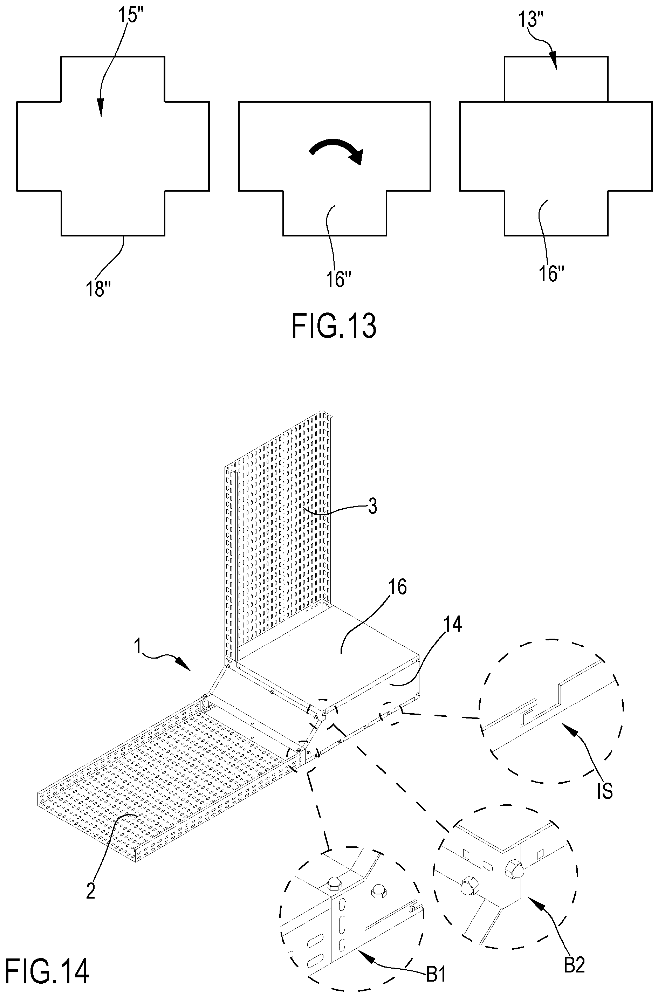

By way of example, Figure 14 shows, in the boxes denoted by B1 and B2, an example of the aforesaid constraining means to constrain the removable cover 16 to the perimeter edge 18 of the open area 15 and of the aforesaid fastening means to fasten the end of the cable trays or ducts 2, 3 to the corresponding connecting opening 12, 13, these means being of the type comprising through holes and/or slots and corresponding screws or bolts.

It should be noted that, according to a preferred aspect of the present invention, the removable covering wall 16 is made of metal foil, and likewise, the box-like body 14 can also be made of metal foils fastened to each other (e.g., by means of threaded fastening means or means of engagement/interlock type, as can be seen in the box IS in Figure 14), so that they can be manufactured by simple metalworking operations. The shape of the removable covering wall 16 and the shape of the respective open area 15, and thus the shape of the corresponding perimeter edge 18, are such that the removable covering wall 16 can be assembled in a directable manner according to a plurality of distinct angular positions with respect to that open area 15. Since the removable covering wall 16 together with the open area 15, when the former is constrained to the perimeter edge 18 of the latter, define a second connecting opening 13, the direction of the removable covering wall 16 with respect to the open area 15 allows the angular position of the second connecting opening 13 to be defined according to a plurality of distinct angular positions.

This means that, depending on the direction in which the removable cover wall 16 is assembled to the perimeter edge 18 of the open area 15, the second connecting opening 13 can be arranged in a plurality of angular positions which allow the respective second coupling direction E to take a distinct position E1, E2, E3 with respect to the open area 15, so as to define a different angle in space with respect to the first coupling direction U.

In particular, these shapes allow the removable covering wall 16 to be arranged according to at least three distinct angular positions relative to the open area 15, and preferably four distinct angular positions, and accordingly allow the aforesaid second coupling direction E to be arranged according to at least three distinct angular positions relative to the first coupling direction U, and preferably according to at least four distinct angular positions.

In Figures 2, 4 and 5, the removable covering wall 16 is constrained to the open area 15, i.e., to its respective perimeter edge 18, at three distinct angular positions so as to define three distinct second coupling directions E1, E2, E3, which are parallel to each other and orthogonal to the first coupling direction U.

The solution shown in those Figures 2, 3, 4 and 5 is made possible by the fact that the open area 15 of the box-like body 14 has squared geometric shape in plan view, and that the respective removable covering wall 16 has rectangular geometric shape in plan view, with two longer opposite sides that are substantially of the same length as the side, or segment, of the square open area 15, and the other two shorter opposite sides that are shorter than the sides of the square open area 15.

The free region delimited between a longer side of the removable covering wall 16 and a side of the square-shaped open area 15 defines the aforesaid second connecting opening 13, which can therefore be arranged at four distinct angular positions (of which only three distinct angular positions are shown in Figures 2, 4 and 5) with respect to the perimeter edge of the open area 15 and, accordingly, with respect to the first connecting opening 12.

In the embodiment shown in these figures, since the open area 15 is not coplanar with, and actually in this case is substantially orthogonal to, the surface of the first connecting opening 12, each second coupling direction E1, E2, E3 respectively defined by the appropriate direction of the removable covering wall 16 with respect to the open area 15 is never coincident with the first coupling direction U but is actually, in this case, always orthogonal to the first coupling direction U.

Depending on the outline of the box-like body and/or the side of this box-like body in which the aforesaid open area is formed with respect to the first connecting opening, other relative positions between the second coupling direction and the first coupling direction are clearly possible.

This way, the use of this angled connector 1 is made extremely versatile, allowing a single angled connector 1 according to the present invention to be used to enable the cables and the respective cable trays or ducts 2, 3 to be arranged according to a plurality of combinations of different extent directions angled to each other, as well as a plurality of mutually different combinations of angular arrangements of the respective cable supporting planes.

In summary, a preferred embodiment of the invention in which the removable covering wall 16 is shaped to define, between a part of an edge thereof and a corresponding part of the ending perimeter edge 18 of the open area 15 of the box-like body 14, the aforementioned connecting opening 13, has been described herein. As mentioned, the possibility of directing in various way such a removable covering wall 16 relative to the open area 15 of the box-like body 14 allows the respective second connecting opening 13 to be arranged in several distinct angular positions. Figures 9 and 10 respectively show two configurations of part of an electrical and/or telephone and/or data network system, comprising the angled connector 1 shown in Figures 2, 3, 4 and 5 in which a first connecting opening 12 defines a first coupling direction U for a cable tray or duct 2 and in which the removable covering wall 16 is constrained to the box-like body 14 of this angled connector 1 at the respective open area 15 according to two distinct angular positions which define two respective and alternative second connecting openings 13 with two corresponding second coupling directions E1 and E3, which are different from each other, for an additional cable tray or duct 3.

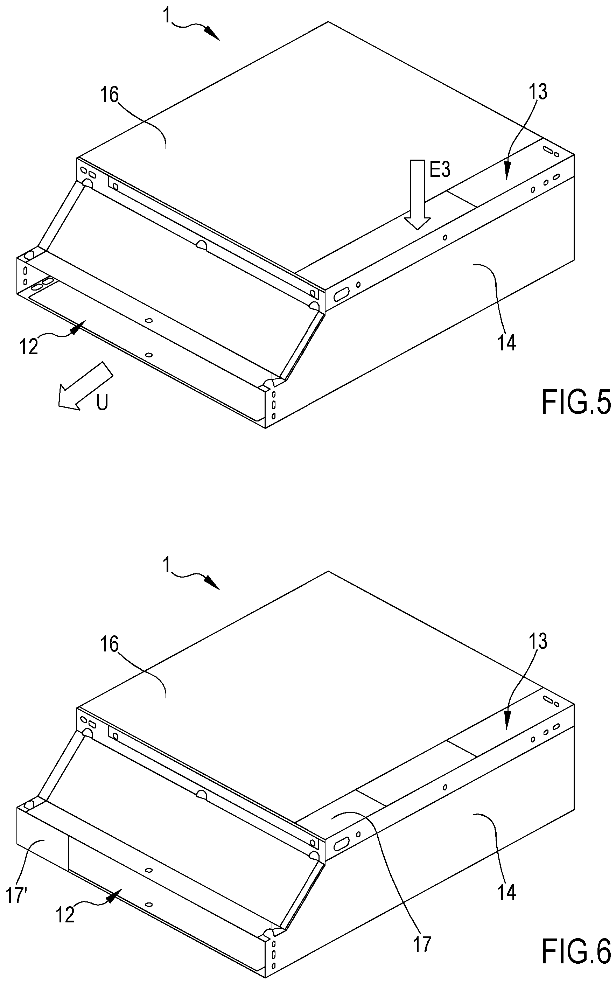

With reference to Figure 6, the angled connector 1, according to a preferred aspect of the present invention, may also comprise at least one removable foil 17, 17' shaped so as to allow at least the aforesaid second connecting opening 13 to be partially blocked.

Specifically, in the embodiment of Figure 6 there are two removable foils 17, 17' partially blocking both the second connecting opening 13 and the first connecting opening 12. These removable foils 17, 17' can be constrained to the box-like body 14 and possibly to the respective removable covering wall 16 by known constraining means, such as screws, bolts, threaded fastening means arranged in holes and/or slots available on these components, or even engagement elements or interlocks by interference of complementary shapes, according to solutions known to the art.

The removable foils 17, 17' of the embodiment of Figure 6 allow the connecting openings 12, 13 to be adapted to cable trays or ducts 2, 3 whose width is less than that originally defined for the connecting opening 13 in the design stage - given by the coupling of the removable covering wall 16 to the ending perimeter edge 18 of the open area 15 of the box-like body 14 - and/or than that defined in the design stage for the connecting opening 12.

In practice, these removable foils 17, 17' shown in Figure 6 reduce the extent of the respective connecting opening 12, 13 along the longer side.

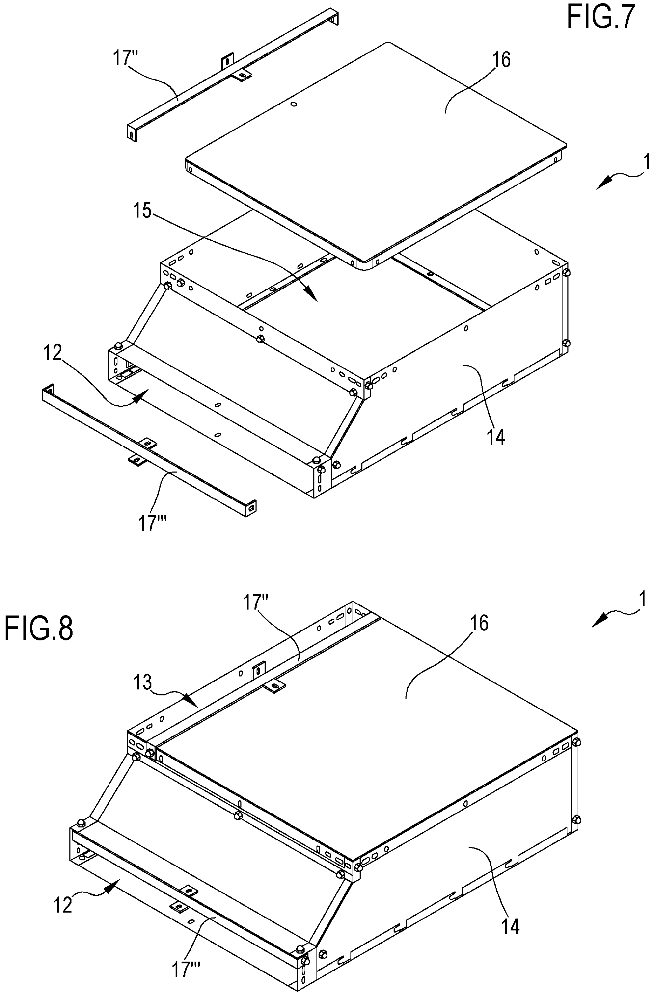

In Figures 7 and 8, the angled connector 1, according to another aspect of the invention, may comprise at least one removable foil 17" and 17‴ that partially blocks at least the second connecting opening 13. Preferably, as shown in these figures, the angled connector 1 comprises two removable foils 17" and 17‴ that partially block both the connecting openings 12, 13 defined in the box-like body 14.

Also in this case, the removable foils 17" and 17‴ may be constrained or fastened to the respective box-like body 14 at the respective connecting opening 12, 13 by known constraining means, such as, by way of example, screws, bolts, threaded fastening means arranged in holes and/or slots available on these components, or even engagement elements or interlocks by interference of complementary shapes, or other means known to those skilled in the art.

The removable foils 17" and 17‴ depicted in Figures 7 and 8 allow the corresponding connecting openings 12, 13 to be adapted to cable trays or ducts 2, 3 whose height is lower than that originally defined for these connecting openings 12, 13.

In particular, the shape of the foils 17" and 17‴ in the embodiment of Figures 7 and 8 is such that they reduce the extent, along the smaller side, of the respective connecting opening 12, 13 for cable trays or ducts 2, 3.

The removable foils 17, 17', 17", 17" in Figures 6, 7, and 8 thus allow the surface of the connecting openings 12, 13 to be reduced so as to adapt these connecting openings 12, 13 to cable trays or ducts 2, 3 whose sectional sizes are smaller than that of the connecting openings 12, 13, as defined in the angled connector 1.

This increases the flexibility and versatility of use of this angled connector 1.

It should be noted herein that the use of at least one removable foil capable of only partially blocking at least one connecting opening of an angled connector (or "skewed elbow") for cable trays or ducts, in order to allow the coupling section of this connecting opening to be easily adapted to the size of the cable tray or duct to be combined with this angled connector, is an extremely effective solution regardless of whether the angled connector is of the type that is object of the invention or is instead a common angled connector of a known type.

In other words, the solution of making a generic angled connector for cable trays or ducts of the type comprising a box-like body, with a plurality of sides, having a first connecting opening which defines a first coupling direction for a first cable tray or duct and at least one second connecting opening defining a second coupling direction for a second cable tray or duct, wherein these first and second coupling directions are not coaxial to each other and preferably are not parallel to each other either, and wherein at least one removable partially blocking foil is provided for at least one of said first connecting opening and second connecting opening, is inventive per se. Specifically, according to a preferred aspect, this removable partially blocking foil can reduce the longest side or the shortest side of the connecting opening to which it is constrained (e.g., by known constraining means, such as threaded means or engagement elements/interlocks).

In general, the removable foil can be constrained to the box-like body so as to partially obstruct a respective connecting opening and can have an outline congruent with that of the coupling section of the cable duct or tray to be connected/constrained to the box-like body of the angled connector.

This way, by selecting the most suitable removable blocking foil, the coupling section of the respective connecting opening is extremely easily adapted to the desired outline, and, for example, to its width and/or height dimensions, of the respective coupling section of the cable tray or duct to be coupled to the box-like body of the angled connector.

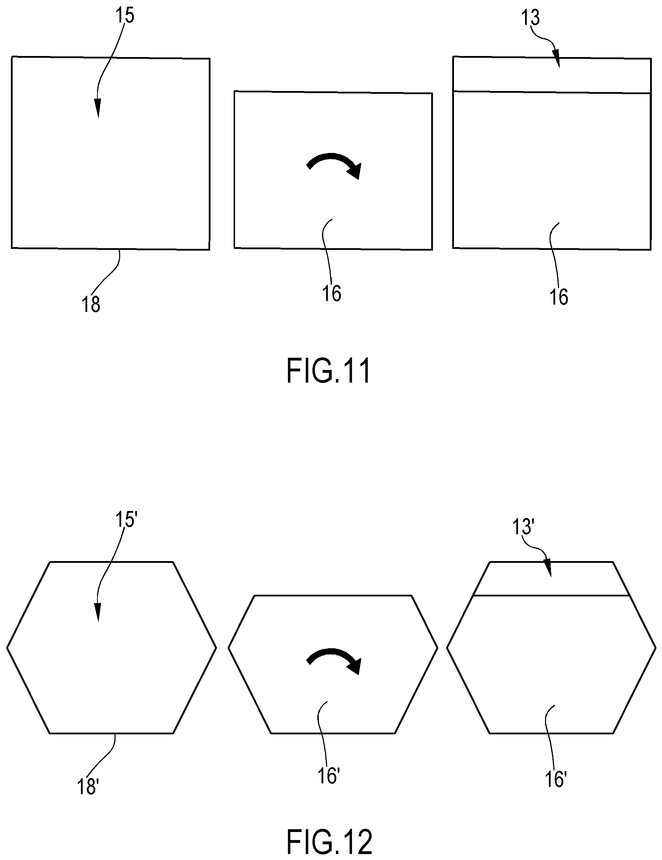

Turning back to the geometry of the angled connector 1 according to the present invention, although an embodiment has been described herein in which the outline of the open area 15 is square and that of the respective covering wall 16 is rectangular, as shown schematically in Figure 11, it is also possible to achieve the solution of the present invention, according to a preferred aspect thereof, by forming this open area, i.e. shaping its perimeter edge, in a regular polygonal shape or circular shape and, as a result, forming the respective removable covering wall in a polygonal or circular shape, congruent with the regular polygonal shape of the open area and equipped with at least one recess next to at least one side of this polygonal shape, or at a specific arc of circumference, so that the aforesaid second connecting section is defined by a part of the perimeter edge of the open area.

In the case where the perimeter edge of the open area 15 follows a regular polygonal shape and the perimeter edge of the respective, substantially sheet-like, removable covering wall 16, in a preferred embodiment of the invention exemplified in Figures 11 and 12, the aforesaid at least one recess may be made according to a line that geometrically "cuts" the removable covering wall linearly at a perimeter side (segment) of the polygonal shape, and that preferably is a straight line parallel to this side.

In other words, in the case of a polygonal perimeter edge, the outline of the removable covering wall 16 is basically that of the regular polygonal open area 15 a portion of which, corresponding to a perimeter side of the regular polygon, has been "removed", i.e., is not present, according to a geometric line preferably straight and parallel to the removed perimeter side.

For example, as schematically shown in Figure 12, which shows a plan view of an open area 15' of a box-like body of an angled connector according to an aspect of the present invention and the respective removable covering wall 16', this open area 15' is shaped, in plan view, as a regular hexagon, and the removable covering wall 16' is shaped as a hexagon which has, at one of its perimeter sides, a recess made according to a straight geometric line parallel to this perimeter side, so that this removable covering wall 16', which can be assembled to be angularly directed in various ways relative to the respective open area 15', defines with the latter a second connecting opening 13' which can be arranged in at least six different angular positions with respect to the first connecting opening (not shown).

In a possible embodiment, although not shown herein and suitable for cable trays or ducts with round profile, the box-like body may comprise a circular open area to which a removable covering wall may be coupled, the latter being also partially circular and having dimensions congruent with those of the open area but being provided with a recess at an arc of circumference thereof. The rotation of this recess of the circular removable covering wall around the center of the circular perimeter edge which defines the open area of the box-like body allows an infinite number of possible relative angular positions to be obtained between removable covering wall and open area, so that the second connecting opening can be freely arranged with respect to the first connecting opening.

According to another aspect of the present invention, the open area of the box-like body may have a star-like shape with a plurality of arms branching off from a central point at equal angular distances, and the respective removable covering wall has a star-like shape that is congruent with the star-like shape of this open area, even though without at least part of an arm of the aforesaid plurality of arms.

For example, with reference to Figure 13, the open area 15" has a star-like shape that can take the form of a Greek cross, i.e., a cross with arms of equal size, and the respective removable covering wall 16" is substantially T shaped, with the three arms having dimensions substantially equal to, or congruent with, those of the arms of the open area 15". The missing arm in the removable covering wall 16 defines the aforesaid second connecting opening 13".

The relative position of the second connecting opening 13" with respect to the first connecting opening of the angled connector is determined by angularly directing the removable covering wall 16" with respect to the open area 15", so as to determine four different arrangements of the second coupling direction for a respective cable tray or duct with respect to the first coupling direction for a different cable tray or duct.

As will be understood, the present invention is not necessarily limited to an angled connector 1 whose box-like body has a single open area 15 to which a respective removable covering wall 16 can be assembled to be angularly directed in various ways, but also encompasses angled connectors provided with two or more open areas with respective removable covering walls that are angularly directable so as to define pluralities of connecting openings for cable trays or ducts with a plurality of different coupling directions.

Furthermore, in an embodiment not shown herein, it is not excluded that the first connecting opening is also defined by coupling an additional respective removable covering wall that is assembled to an additional open area of the box-like body. This additional removable covering wall is shaped so as not to entirely obstruct this additional open area and preferably can be assembled to be directable in various ways, according to a plurality of distinct angular positions, with respect to this additional open area to define the aforesaid first connecting opening.

The solution illustrated herein makes it possible, during the installation of the electrical and/or telephone and/or data network system, to use the same angled connector 1 and establish each time the desired relative direction of the inlet and outlet coupling directions E, U of the cables supported by two respective cable trays or ducts 2, 3, by simply assembling each time the removable covering wall 16 to the box-like body 14 at the respective open area 15 according to the direction most appropriate to obtain the correct angular position of the aforesaid second connecting opening 13 with respect to the first connecting opening 12.

This way, in order to be able to install an electrical and/or telephone and/or data network system in which the cables must undergo at least one change of direction, it is no longer necessary to have a plurality of angled connectors of different types available, each of which is constructed with a predefined and substantially unchanging orientation between the aforesaid first and second coupling directions. The use of the angled connector 1 described herein makes it possible to simplify and reduce the number of types of angled connectors needed.

As the Reader skilled in the art should have understood from the above, the connector claimed herein is a "universal" connector which is suitable for connecting, with extreme ease of use, cable ducts or trays of any height, with any direction and on non-coincident supporting planes. In particular, this "universal" connector allows easy cable laying, even through "open cable routing", and can thus prevent the dangerous and costly task of threading the cables themselves.

This connector of the present invention also reduces the number of items corresponding to the various connector types currently in use, allows easy industrialization of the product and, in addition, significant production optimization, allows a substantial decrease in the required storage space; and of course significantly shortens the supply time.

## Claims

1. Angled connector (1) for cable ducts or trays (2, 3), of the type comprising a box-like body (14) with a plurality of sides, having a first connecting opening (12) which defines a first coupling direction (U) for a first cable duct or tray (2), and at least one open area (15; 15'; 15"), which substantially corresponds to one side of said box-like body (14) and which is distinct from said first connecting opening (12), and can be coupled to a respective removable covering wall (16; 16'; 16"), **characterized in that** said respective removable covering wall (16; 16'; 16") is shaped so as not to entirely obstruct said at least one open area (15; 15'; 15") and can be assembled in a directable manner according to a plurality of distinct angular positions with respect to said at least one open area (15; 15'; 15") in order to define at least one second connecting opening (13) which defines a second coupling direction (E; E1, E2, E3) for a second cable duct or tray (3).

2. Angled connector (1) for cable ducts or trays (2, 3) according to claim 1, wherein said respective removable covering wall (16; 16'; 16") can be directed along at least three different angular positions, distinct from each other, with respect to said at least one open area (15; 15'; 15").

3. Angled connector for cable ducts or trays according to claim 1 or 2, **characterized in that** said at least one open area (15; 15') has regular polygonal shape or circular shape and **in that** said respective removable covering wall (16; 16') has polygonal shape, or circular shape, congruent with the regular polygonal shape or circular shape of said at least one open area (15; 15') and is provided with at least one recess next to at least one perimeter side of that polygonal shape, or at a given arc of circumference, to define said second connecting opening (13).

4. Angled connector for cable ducts or trays according to claim 3, wherein said at least one open area (15, 15') has regular polygonal shape, said connector being **characterized in that** said at least one recess is made in the removable covering wall (16; 16') with a geometric line parallel to a perimeter side of said polygonal shape.

5. Angled connector (1) for cable ducts or trays (2, 3) according to any one of the preceding claims, **characterized in that** said at least one open area (15) has square shape and said respective removable covering wall (16) has rectangular shape, two opposite sides of said removable covering wall having substantially the same length of the side of said open area.

6. Angled connector (1) for cable ducts or trays (2, 3) according to claim 1 or 2, wherein said at least one open area (15") has a star-like shape with a plurality of arms branching off from a central point, and said respective removable covering wall (16") has a star-like shape congruent with the star-like shape of said at least one open area, even though without at least part of an arm of said plurality of arms.

7. Angled connector (1) for cable ducts or trays (2, 3) according to any one of the preceding claims, **characterized in that** said second coupling direction (E; E1, E2, E3) for a second cable duct or tray (3) is not coincident with said first coupling direction (U).

8. Angled connector (1) for cable ducts or trays (2, 3) according to any one of the preceding claims, wherein said removable covering wall (16; 16'; 16") is made from substantially planar sheet metal.

9. Angled connector (1) for cable ducts or trays (2, 3) according to any one of the preceding claims, wherein said first coupling direction (U) is substantially orthogonal to said second coupling direction (E; E1, E2, E3).

10. Angled connector (1) for cable ducts or trays (2, 3) according to any one of the preceding claims, **characterized by** comprising at least one removable foil (17, 17', 17", 17‴) partially blocking at least said second connecting opening (13) and/or said first connecting opening (12).

11. Angled connector (1) for ducts or cable trays (2, 3) according to any one of the preceding claims, wherein said second connecting opening (13) is delimited at least by part of the perimeter edge (18) of said at least one open area (15; 15'; 15") and at least by part of said removable covering wall (16; 16'; 16").

12. Angled connector (1) for cable ducts or trays (2, 3) according to any one of the preceding claims, **characterized in that** said first connecting opening (12) is defined by the coupling of an additional removable covering wall assembled to an additional open area of the box-like body, said additional removable covering wall being shaped so as not to entirely obstruct said additional open area and being able to be assembled to be angularly directed in various ways relative to said additional open area to define said first connecting opening (12).
